# EUROPEAN PATENT APPLICATION

(11) **EP 2 138 430 A1**
(43) Date of publication of application: **30.12.2009**
(21) Application number: 09153446.1
(22) Date of filing: 23.02.2009
(51) Int. Cl.: B65G 17/18, B65G 17/12

(54) **Transport conveyor**

(30) Priority: 25.06.2008 CN 200810106957
(71) Applicant: Suzhou Jiangnan Jiajie Elevator Corp., Suzhou Jiangsu 215122 (CN)
(72) Inventor: Hua, Xianduo, 215122, Suzhou (CN); Ruan, Jianhua, 215122, Suzhou (CN); Zhang, Zhiyan, 215122, Suzhou (CN)
(74) Representative: Lermer, Christoph

(57) **Abstract**

The present invention relates to an apparatus and a method for changing the moving direction of a pallet (7) moving on wheels (3,4) at the end of a transport conveyor, and also relates to a transport conveyor with low overall height. The transport conveyor comprises a frame (14); a transport passage which mainly consists of several continuous pallets located inside the frame; a first-side front wheel (4a) and a first-side back wheel (3a) respectively mounted on the front and back of a first side of each pallet; a second-side front wheel (4b) and a second-side back wheel (3b) respectively mounted on the front and back of a second side of each pallet; a first-side transmission part (1) and a second-side transmission part (2) adapted to drive pallets, which are parallel on the first and second sides of the pallet respectively; a first-side driving part (6a) and a second-side driving part (6b) adapted to drive the first-side transmission part and the second-side transmission part respectively. In the moving direction of the pallet to be turned, the rotation axis of the first-side driving part and the rotation axis of the second-side driving part are staggered in front and back with each other. The transport conveyor can be mounted directly on a base, as a floor. In addition, if necessary, the transport conveyor structure can be relocated to a new location with minor variations and at a low cost.

## Description

### TECHNICAL FIELD

This invention relates to an apparatus and a method for changing the direction of motion of a pallet moving on wheels at the end of a transport conveyor or the like, and also relates to a transport conveyor with low overall height or the like.

### BACKGROUND OF THE INVENTION

Like travelator or escalator, transport conveyor is a transport device designed to move passengers or goods. It's similar to present travelator, in that they are operated in a narrow slant angle, typically by 0~12°, to transport people or goods from one place to another. Pallets form a substantial flat and linear track, in which case the transport conveyor resembles a belt conveyor.

In prior-art, a transport conveyor having a relatively larger driving machinery and a larger mechanism for turning end pallets, must be provided with a pit about one-meter deep and several-meter long to either end of the transport conveyor to receive a structure for setting the driving machinery of and the mechanism for turning end pallets, further with another pit about half-of-one-meter deep to receive middle part of the transport conveyor. One drawback with this type of transport conveyor is that added load bearing structures must be arranged around the pits, which must be taken into account at the time of designing a building, not only increasing the design cost and the fixing cost of transport conveyor, but also resulting in the conveyor unable to be fixed or used in buildings which does not take load bearing structures into account; and the other drawback is that quickly transferring the transport conveyor from one place to another is too hard to implement, for the particular requirements on transferring and reinstallment.

In prior-art solution, when the continuously moving pallets reach the mechanism for turning pallets at the end of transport conveyor, they turn upside down into return direction after going around a large-diameter wheel, and after reaching the beginning of the lower side track, the pallets again turn back into normal traveling direction through another turning mechanism at the other end of transport conveyor. One major problem with this type of prior-art solution is that the mechanism for turning pallets at the ends of the track, needs a turning space at a height at least equal to the length of the pallet, even being several times of the length of the pallet in consideration of running stationarity, that is why this kind of conveyer needs a pit with large room.

In Chinese Patent No.200480031636.7, which discloses a conveyor that could overcome the drawback described above, a pallet is connected with a driving cogged belt or a chain by a fastening element positioned on the middle of both sides of the pallet, the rear end of which is guided by a specially-mounted supporting element from the ground level in the transport direction to another level. During the whole turning process, the pallet maintains a substantially constant attitude without turning upside down, which means people do not need to specially set a large turning room.

However, at each end area of tracks on both sides of the pallets, several passage openings are required to allow the fasten element and back wheels getting through, which affects smoothness of the front wheels getting through these passage openings, causing vibration of pallets. Moreover, in some regions, there are only two back wheels supporting the pallet, if the passage opening is badly designed. In addition, according to the equation about the distance between the rotational center of the idler and the rotational center of the drive sprocket: L=1/2*(p-π/2*r), wherein p represents the distance between the fastening elements of successive pallets, namely distance of two pallets, which is proportional to the pitch of the cogged belt, and r represents the radius of the sprocket, which is also proportional to the pitch of the cogged belt, so we arrives that L is proportional to the pitch of the cogged belt. While the cogged belt is prolonged by reasons of ageing or abrasion, L theoretically is supposed to accordingly become larger, but as L is equal to half of the distance between the front wheel and the back wheel of one pallet, which is a constant factor being fixed since manufactured, it would make incoordination of the pallet when changing direction at the end of the conveyor.

### SUMMARY OF THE INVENTION

It is an object of the present invention to overcome the above mentioned drawbacks of prior arts, and to provide a method and an apparatus for changing the direction of pallets at the end of a transport conveyor or other equivalents, that apparatus is simple in mechanical construction and reliable in operation. A further object of the present invention is to provide a transport conveyor with low structure height, which could be mounted directly on a base, e.g., on the floor. Moreover, the transferring of transport conveyor or other equivalents from one place to another can be quickly accomplished, if transport conveyor or other equivalents need to be transferred or reset.

According to one exemplary embodiment, the present invention relates to an apparatus for changing the direction of a pallet of a transport conveyor comprising, a pallet (footplate) having a first-side front wheel and a first-side back wheel respectively located on the front and back of its first side, a second-side front wheel and a second-side back wheel respectively located on the front and back of its second side which is opposite to first side, a first-side transmission part and a second-side transmission part adapted to drive the movement of pallet, which are parallel and respectively located on the first side and second side of the pallet; a first-side driving part and a second-side driving part adapted to drive the first-side transmission part and the second-side transmission part respectively. The rotation axis of the first-side driving part and the rotation axis of the second-side driving part are staggered in front and back with each other along the direction of motion of the pallet whose direction is right before being changed.

Moreover, the apparatus referred above further comprises a first-side track, to support the first-side back wheel and first-side front wheel; and a second-side track, to support the second-side back wheel and second-side front wheel. A first-side steering channel is positioned on the first-side track, through which the first-side back wheel can move from the upward side to downside of the first-side track, or from its downside to upward side. A second-side steering channel is positioned on the second-side track, through which the second-side back wheel is able to move from the upward side to downside of the second-side track, or from its downside to upward side.

On the first side of the pallet, at least one first-side connector is mounted, being rotatablely connected with the first-side transmission part; while on the second side of the pallet, at least one-second side connector is mounted, being rotatablely connected with the second-side transmission part. By defining a center line on the pallet along left-to-right direction, which is vertical to the moving direction of the pallet, one of the first-side connector and the second-side connector is in front of the center line, the other is behind the center line, in the moving direction of the pallet.

Moreover, on a plane along the moving direction of the pallet to be turned, the projected distance between the central axis of the first-side connector and the rotation axis of the first-side driving part is equal to the projected distance between the central axis of the second-side connector and the rotation axis of the second-side driving part.

The first-side front wheel has an axle, of which the first-side connector was formed by the extension. The second-side back wheel has an axle, of which the second-side connector was formed by the extension. On a plane along the moving direction of the pallet to be turned, the projected distance from the axle of the first-side front wheel to the rotation axis of the first-side driving part is equal to the projected distance between the axle of the second-side back wheel and the rotation axis of the second-side driving part. On the second-side track is mounted an axle steering channel, via which the second-side back wheel moves from being above the second-side track to being below or from being below the second-side track to being above.

In the moving direction of the pallet, the first-side front wheel and first-side back wheel are staggered to right and left of each other, and the same as the second-side front wheel and the second-side back wheel.

According to the second exemplary embodiment, the present invention relates to a method to change the moving direction of the pallet at one end of a transport conveyor, in which, the pallet is driven by the first-side transmission part and the second-side transmission part. In the moving direction of the pallet to be turned, the first-side driving part used to drive the first-side transmission part and the second-side driving part used to drive the second-side transmission part are staggered in front and back with each other. The first-side transmission part is rotatablely connected to the first side of the pallet via at least one first-side connector. The second-side transmission part is rotatablely connected to the second side of the pallet opposite to its first side via at least one second-side connector. By defining a center line on the pallet along left-to-right direction, which is vertical to the moving direction of the pallet, one of the first-side connector and the second-side connector is in front of the center line, the other is behind the center line, in the moving direction of the pallet. In addition, on a plane along the moving direction of the pallet to be turned, the projected distance from the central axis of the first-side connector to the rotation axis or the first-side driving part is equal to the projected distance from the central axis of the second-side connector and the rotation axis of the second-side driving part. Each pallet keeps be located on parallel surfaces when at variational heights during the cycled process in sequence including transport, moving down, return, and moving up.

Furthermore, when the pallet is moving down, the first-side back wheel and second-side back wheel respectively move through the first-side steering channel and the second-side steering channel from the upward sides of the first-side track and the second-side track to the downsides; while when the pallet is moving upwards, the first-side back wheel and the second side back wheel respectively move through the first-side steering channel and the second-side steering channel from the downsides of the first-side track and the second-side track to the upward sides.

According to the third exemplary embodiment, the present invention relates to a transport conveyor with low overall height, comprising, a frame; a pallets transport channel which comprises several continuous pallets located inside the frame; a first-side front wheel and a first-side back wheel respectively mounted on the front and back of a first side of the pallet; a second-side front wheel and a second-side back wheel respectively mounted on the front and back of a second side which is opposite to the first side of pallet; a first-side transmission part and a second-side transmission part adapted to drive pallets, which are parallel on the first side and second side of the pallet respectively; a first-side driving part and a second-side driving part adapted to drive the first-side transmission part and the second-side transmission part respectively. In the moving direction of the pallet to be turned, the rotation axis of the first-side driving part and the rotation axis of the second-side driving part are staggered in front and back with each other.

Preferably, the transport conveyor further comprises a first-side track adapted to support the first-side front wheel and the first-side back wheel, and a second-side track adapted to support the second-side front wheel and the second-side back wheel. A first-side steering channel is positioned on the first-side track, for the first-side back wheel getting through. A second-side steering channel is positioned on the second-side track, for the second-side back wheel getting through.

At the first side of the pallet is mounted at least one first-side connector, which is connected rotatablely with the first-side transmission part, while at the second side of the pallet is mounted at least one second-side connector, which is connected rotatablely with the second-side transmission part. By defining a center line on the pallet along the left-to-right direction vertical to the moving direction of the pallet, one of the first-side connector and the second-side connector is in front of the center line, and the other is behind the center line, in the moving direction of the pallet.

Moreover, on a plane along the moving direction of the pallet to be turned, the projected distance between the central axis of the first-side connector of the pallet and the rotation axis of the first-side driving part of the pallet is equal to the projected distance between the central axis of the second-side connector of the pallet and the rotation axis of the second-side driving part of the pallet.

The first-side front wheel has an axle, of which the first-side connector was formed by the extension. The second-side back wheel has an axle, of which the second-side connector was formed by the extension. On a plane along the moving direction of the pallet to be turned, the projected distance from the axle of the first-side front wheel to the rotation axis of the first-side driving part is equal to the projected distance between the axle of the second-side back wheel and the rotation axis of the second-side driving part. On the second-side track is mounted an axle steering channel, via which the second-side back wheel moves from the upward side of the second-side track to the downside or from the downside of the second-side track to the upward side.

In the moving direction of the pallet, the first-side front wheel and first-side back wheel are staggered to right and left of each other, and the same as the second-side front wheel and the second-side back wheel.

One advantage of the present invention is that the low overall height of the transport conveyor structure allows it to be mounted directly on a base at the lowest point. According to an exemplary embodiment, the overall height of the conveyor is only slightly greater than the sum height of two pallets, consequently providing return space for pallets moving back and forth. The base can use asphalt or concrete floor out of a building or a floor inside a building. As the structure described above adopted, specially-made pit or specifically-reserved space is not required, resulting in cost savings of building and the transport conveyor, and also providing flexibility in the location of the transport conveyor. In addition, if necessary, the transport conveyor structure can be relocated to a new location with minor variations and at a low cost.

The first-side driving part and the second-side driving part of pallet are staggered in front and back with each other along the moving direction of the pallet to be turned, and the projected distance between the central axis of the first-side connector of the pallet and the rotation axis of the first-side driving part is equal to the projected distance between the central axis of the second-side connector of the same pallet and the rotation axis of the second-side driving part in the direction of the motion of the pallet. Guided by the first-side driving part and the second-side driving part, when changing its direction at the end of the conveyor, the pallet moves from one level to another different level, and keeps horizontal during its turning process. Accordingly, pallets can be prevented being in congestion when one pallet situates at any height when being turned.

In the end of the tracks at both sides , there is only one opening needed for the axes of back wheels getting through, which guarantees at least three wheels to support the pallet and the pass smoothness of the front wheel. Even driving chains or cogged belts are prolonged by reason of ageing or abrasion, the incoordination of pallets when changing direction at the end of the conveyor can be avoided.

Another advantage is the simple structure, the first-side connector formed by the extension of the axle of the first-side front wheel, the second-side connector formed by the extension of the axle of the second-side back wheel, that makes sure that , for the altitude of the pallet descending, there only need to be a first-side steering channel and a second-side steering channel for the first-side back wheel and the second-side back wheel passing through respectively, and an axes steering channel for the fastening element namely the axes, mounted behind the central line of the pallet, passing through. At the same moment of direction changing of a pallet, there are at least three wheels supporting the pallet, situated between the first-side track and the pallet, and between the second-side track and the pallet, which makes the apparatus for changing the direction of pallets run steadily.

### BRIEF DESCRIPTION OF THE DRAWINGS

The present invention will now be described in detail with reference to several exemplary embodiments, referring to the attached drawings, wherein,
FIG. 1 is a side view of the exit end of an exemplary embodiment of the transport conveyor structure according to the present invention;
FIG.2 is a top view of the exit end of the transport conveyor structure according to the invention;
FIG.3 is a sectional side view of FIG.2 along the line A-A;
FIG.4 is a sectional side view of FIG.2 along the line B-B;
FIG.5 is a partial enlarged drawing of the side view of the first-side steering channel;
FIG.6 is a partial enlarged drawing of the side view of the second-side steering channel.

### DETAILED DESCRIPTION OF THE PREFERRED EMBODIMENTS

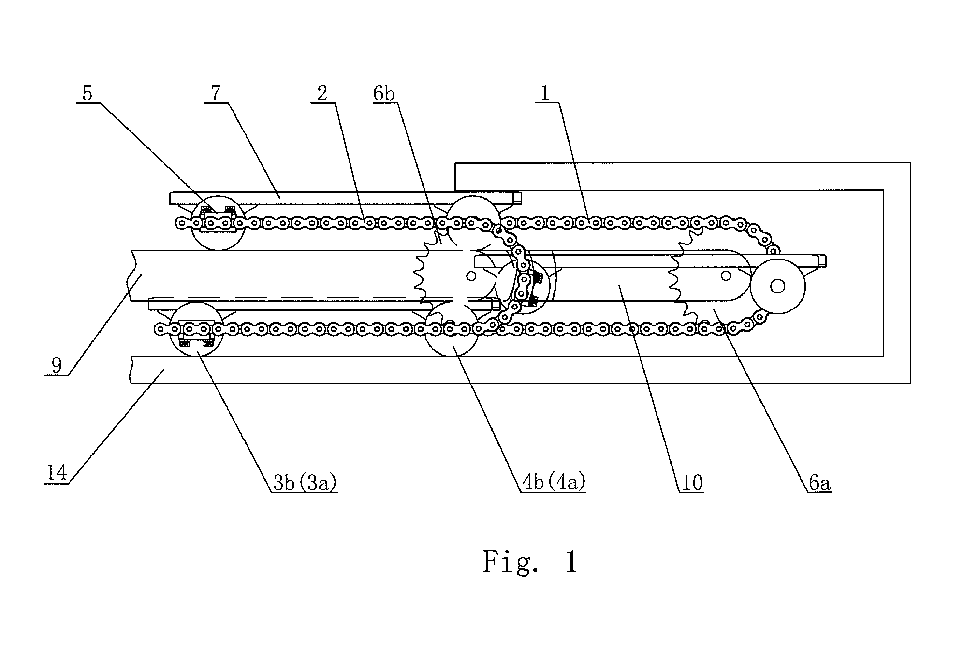

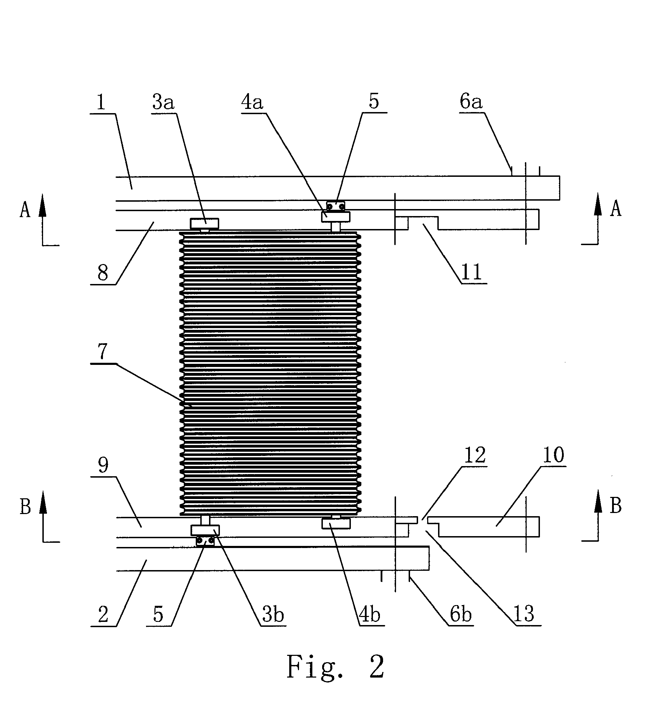

Referring to FIG. 1 and FIG.2, the transport conveyor with low overall height, comprises a frame 14, provided to hold the structural members together and transmit the forces to the floor under it, a continuous transport passageway consisting of a plurality of pallets 7, located inside the frame 14. By defining the moving direction of the pallet as front, the left side of the pallet as a first side, and the right side which is opposite to the left side of the pallet as a second side, a first-side front wheel 4a and a first-side back wheel 3a are mounted respectively on the front and back of the first side of each pallet 7, and a second-side front wheel 4b and a second-side back wheel 3b are mounted respectively on the front and back of the second side of the pallet 7. A first-side transmission part 1 and a second-side transmission part 2 adapted to drive pallet 7 are mounted parallel on the first side and second side of the pallet 7 respectively. A first-side driving part 6a and a second-side driving part 6b are adapted to drive the first-side transmission part 1 and the second-side transmission part 2 respectively. The rotation axis 15a of the first-side driving part 6a and the rotation axis 15b of the second-side driving part 6b are staggered / displaced in front and back with each other along the moving direction of the pallet 7 whose direction is right before being changed. The first-side transmission part 1 and the second-side transmission part 2 are both chains, while the first-side driving part 6a and the second-side driving part 6b are both sprocket wheels, revolving to drive the chains respectively.

Referring to FIG.2, the transport conveyor with low overall height further comprises a first-side track 8 adapted to support the first-side front wheel 4a and the first-side back wheel 3a and guide the related wheels moving along, a second-side track 9 adapted to support the second-side front wheel 4b and back wheel 3b and guide the related wheels moving along, a first-side steering channel 11 positioned on the first-side track 8, through which the first-side back wheel 3a passes from being on the first-side track 8 to its downside, when the pallet 7 moves down at one end of the transport conveyor, to get into the moving-back process, and passes from being below the first-side track 8 to its upward side, when the pallet 7 goes up to get back to the transport process at the other end, and a second-side steering channel 13 positioned on the second-side track 9. Similarly to the first-side back wheel 3a, the second-side back wheel 3b moves through the steering channel 13 from being on the second-side track 9 to being below the second-side track 9 when the pallet 7 moves down to get into moving-back course, or from being below the second-side track 9 to being on the second-side track 9, when the pallet 7 goes up to get back to the transport process.

The first-side track 8 is positioned under the first side back wheel 3a and the first-side front wheel 4a of the pallet 7 which is in the process of transport. The second-side track 9 is positioned under the second-side back wheel 3b and second-side front wheel 4b.

It mounts at least one first-side connector 5a which is connected rotatablely with the first-side transmission part 1 at the first side of the pallet 7, and at least one second-side connector 5b which is connected rotatablely with the second-side transmission part 2 at the second side of the pallet 7. By defining a center line C1-C2 on the pallet 7 by its center, along left-to-right direction, which is vertical to the moving direction of the pallet 7, one of the first-side connector 5a and the second-side connector 5b is located in front of the center line C1-C2, and the other is behind the center line C1-C2, based upon the moving direction of the pallet 7 being regarded as fore-and-aft direction.

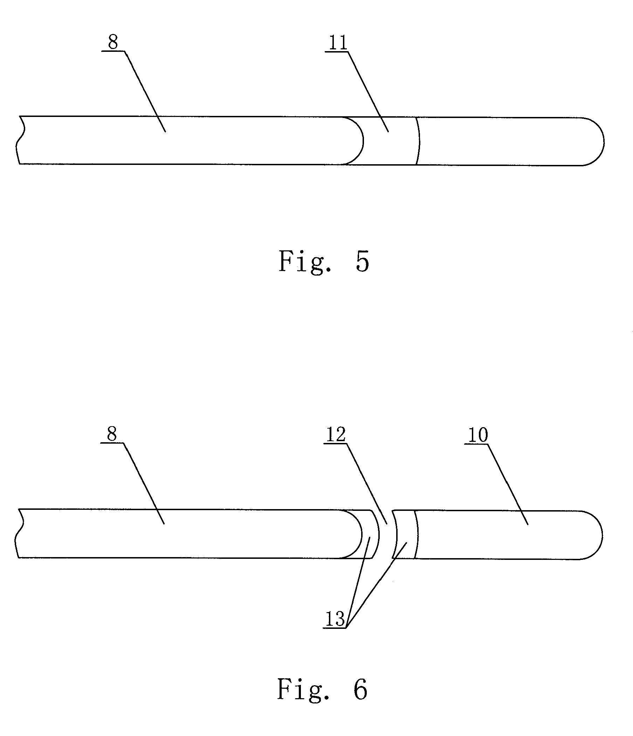

Referred to the embodiment shown in FIG.2, the axis of the first-side front wheel 4a is extended to form the first-side connector 5a, and the axis of the second-side back wheel 3b is extended to form the second-side connector 5b. So as along the moving direction of the pallet 7, the first-side connector 5a is in front of the center line C1-C2 and the second-side connector 5b is behind the center line C1-C2. On the second-side track 9 is mounted an axle steering channel 12, open into the second steering channel 13, for the axis of the second-side back wheel 3b passing through. The forming of the first-side connector 5a and the second-side connector 5b by extension of the axle, results in that only one passage channel is required on each of the first-side track 8 and the second-side track 9 to get the back wheels through, instead of mounting another extra steering channel on the second-side track 9 to get the second-side connector 5b through, which improves smoothness of the track. As shown in FIG.6, the sectional area of the opening of the axel steering channel 12 is less than the sectional area of the opening of the second-side steering channel 13.

The projected distance between the central axis of the first-side connector and the rotation axis of the first-side driving part is equal to the projected distance between the central axis of the second-side connector and the rotation axis of the second-side driving part.

While pallets 7 moving, on a plane along the moving direction of the pallet 7 to be turned, the projected distance dl between the central axis of the first-side connector 5a and the rotation axis of the first-side driving part 15a is equal to the projected distance d2 between the central axis of the second-side connector 5b and the second-side driving part rotation axis 15b. On another plane along the moving diretion of one pallet 7 that is on back way, the projected distance between the axis of the second-side driving part rotation 15b and the axis of the second-side back wheel 3b is equal to the projected distance between the rotation axis the first-side driving part 15a and the axis of the first-side front wheel 4a. So, along the moving direction of the pallet 7, if a wheel axis which extends to form a connector is in front of the central line C1-C2, the driving part which is on the same side with the wheel axis is in front of the other driving part which is on the other side.

According to the idea of the invention described above, those of skill in the art can get a hereinafter-described second exemplary embodiment not shown in the drawings. If in the second embodiment, the end of the axle of the first-side back wheel 3a extends to form the first-side connector 5a, and the end of the axle of the second-side front wheel 4b extends to form the second-side connector 5b, which means that the second-side connector 5b is in front of the central line C1-C2 and the first-side connector 5a is behind the central line C1-C2, correspondingly, the axle steering channel 12 for the axle of the fist side back wheel 3a passing through is supposed to be positioned on the first-side track 8, and the first-side steering channel 11 and the second-side steering channel 13 is formed in ways as the first exemplary embodiment, while the axle steering channel 12 is connected with the first-side steering channel 11. For the axle of second-side front wheel 4b and the axle of the first-side back wheel 3a extend to respectively form the second-side connector 5b and the first-side connector 5a, correspondingly, the projected distance between the second-side driving part 6b and the axle of the second-side front wheel 4b is supposed to be equal to the projected distance between the first-side driving part 6a and the axle of the first-side back wheel 3a.

As shown in FIG.2, the first and second exemplary embodiments described above also guarantee that the pallet 7 is just moving along the pitch circles of the first-side driving part 6a and the second-side driving part 6b when in descent and ascent processes, and the pallet 7 stands horizontal through all the processes, which means that the plane formed by the pallet 7 in descent process or ascent process is parallel to the plane formed by the pallet 7 in transport process or return process.

While in transport process, the pallet 7 is above the first-side track 8 and the second-side track 9; while in return process, pallet 7 is below the first-side track 8 and second-side track 9, and the pallet 7 moves in a direction opposite to the moving direction in transport process. Between the transport process and the return process, at the end of a conveyor, the pallet 7 moves up or moves down, and during the moving down and moving up process, the first-side back wheel and the second-side back wheel respectively enter into the first-side steering channel and the second-side steering channel.

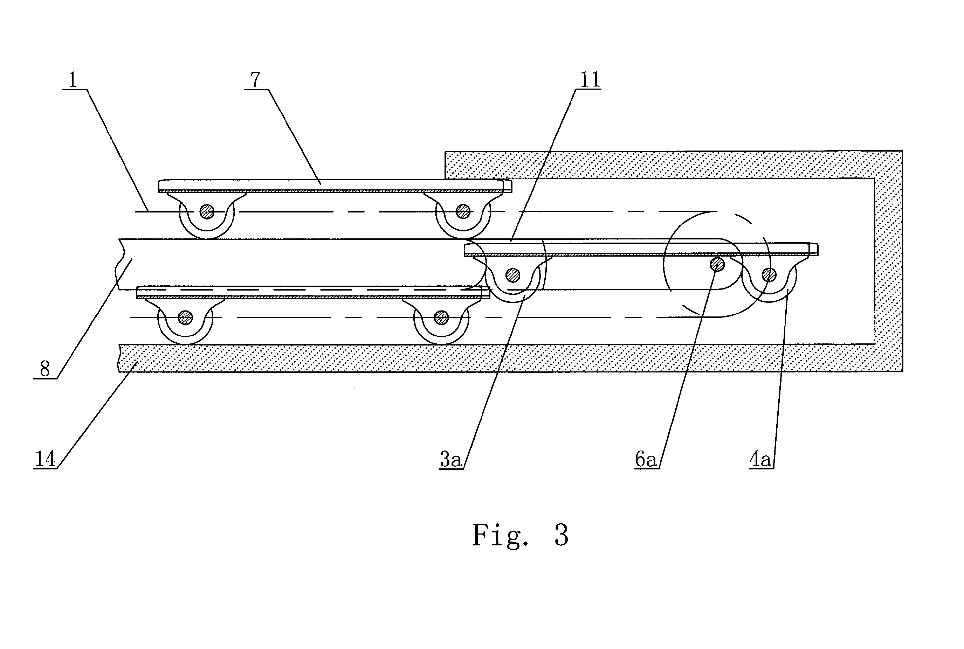

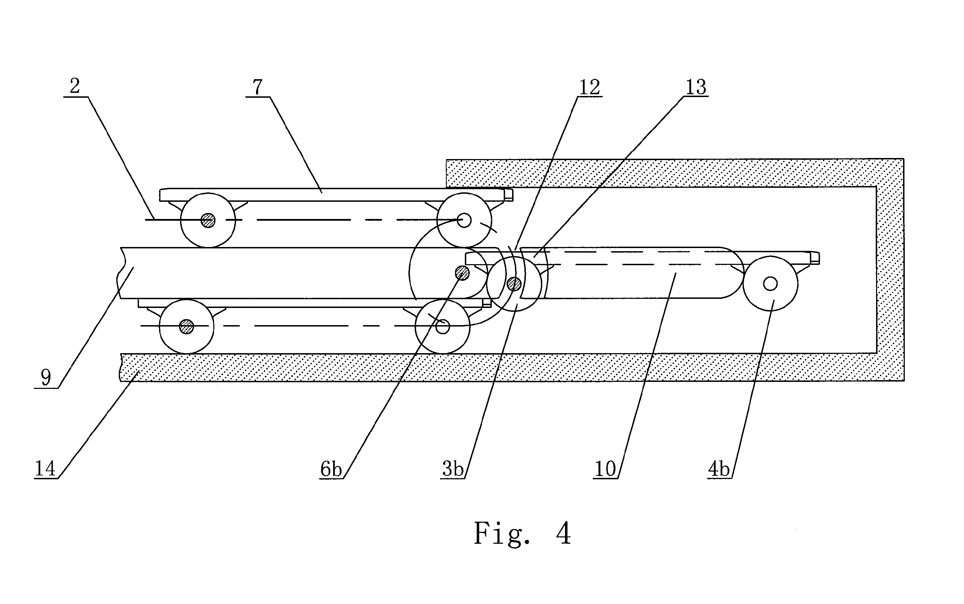

In the moving direction of the pallet 7, the first-side front wheel 4a and the first-side back wheel 3a are staggered / displaced to right and left of each other, and the same as the second-side front wheel 4b and the second-side back wheel 3b. Correspondingly, on one side of a pallet 7, if the distance between the front wheel and the side edge of the pallet 7 is longer than the distance between the back wheel and the same side edge of the pallet 7, the steering channel only need be positioned on the inner side of the ipsilateral track, thus the related track still supports under the front wheel when the front wheel moves to the steering channel, and the back wheel gets through the steering channel to move down, as shown in FIG.3; to the contrary, if the distance between the front wheel and the side edge of the pallet 7 is shorter than the distance between the back wheel and the same side edge of the pallet 7, there should be an axle steering channel whose width is shorter than the diameter of the front wheel on the inner side of the ipsilateral track and another steering channel whose width is longer than the diameter of the back wheel connecting with the axle steering channel, so the related track acts as a flat when the front wheel arrives at the steering channel, and simultaneously the back wheel can smoothly past through the steering channel to accomplish altitude decent, as shown in FIG.4. It ensures the motion stability of pallet 7 moving on the tracks and the operational reliability of the conveyor, around the end of which, the pallet 7 is turned smoothly, for there are at least three wheels supporting the pallet 7 on the first-side track and the second-side track.

It will be understood that the above description of the present invention is susceptible to various modifications, changes and adaptations, and the same are intended to be comprehended within the meaning and range of equivalents of the appended claims. For example, the apparatus and related methods to change the direction of pallets can also be used on declining conveyors or functional equivalents, as oblique moving travelators.

## Claims

1. An apparatus for changing the direction of a pallet of a transport conveyor, comprising,
A pallet (7), with a first-side front wheel (4a) and a first-side back wheel (3a) located on the front and back of its first side respectively, and a second-side front wheel (4b) and a second-side back wheel (3b) located on its second side which is opposite to said first side;
A first-side transmission part (1) and a second-side transmission part (2), adapted to drive said pallet (7), being parallel on the first side and the second side of said pallet (7);
A first-side driving part (6a) and a second-side driving part (6b), adapted to drive said first-side transmission part (1) and the second-side transmission part (2) respectively; is **characterized in that**
The rotation axis (15a) of said first-side driving part (6a) and the rotation axis (15b) of said second-side driving part (6b) are staggered in front and back with each other in the moving direction of the pallet (7) whose direction is about to be changed.

2. The apparatus according to claim 1, further comprising
A first-side track (8) adapted to support the first-side front wheel (4a) and the first-side back wheel (3a) moving along;
A second-side track (9) adapted to support the second-side front wheel (4b) and the second-side back wheel (3b) moving along;
A first-side steering channel (11), positioned on said first-side track (8), through which the first-side back wheel (3a) moves from being on the first-side track (8) to being below the first-side track (8), or from being below the first-side track (8) to being above the first-side track (8); and
A second-side steering channel (13), positioned on said second-side track (9), through which the second-side back wheel (3b) moves from being on the second-side track (9) to being below the second-side track (9), or from being below the second-side track (9) to being above the second-side track (9).

3. The apparatus according to claim 2, wherein at least one first-side connector (5a) is provided which is connected rotatablely with the first-side transmission part (1) on the first side of said pallet (7) and at least one second-side connector (5b) which is connected rotatablely with the second-side transmission part (2) on the second side of said pallet (7), in the manner that, by defining a center line (C1-C2) on the pallet (7) by its centre, along a left-to-right direction, which is vertical to the moving direction of the pallet (7), along moving direction of the pallet (7), one of said first side connector (5a) and second side connector (5b) is in front of the center line (C1-C2), whereas the other one is behind the center line (C1-C2).

4. The apparatus according to claim 3, wherein on a plane along the moving direction of the pallet (7) right before direction changing, the projected distance between the central axis of the first-side connector (5a) on the pallet (7) and the rotation axis (15a) of the first-side driving part is equal to the projected distance from the central axis of the second-side connector (5b) on the same pallet (7) to the rotation axis (15b) of the second-side driving part.

5. The apparatus according to claim 3, wherein
the axle of the first-side front wheel (4a), extending outwards to form the first-side connector (5a), with
the axle of the second-side back wheel (3b), extending outwards to form the second-side connector (5b), and moving through an axle steering channel (12) mounted on the second-side track (9), from being above the second-side track (9) to being below or from being below the second-side track (9) to being above,
are positioned as that, on a plane along the moving direction of the pallet (7) to be turned, the projected distance between the axle of the first-side front wheel (4a) of the pallet (7) and the rotation axis (15a) of the first-side driving part is equal to the projected distance between the axle of the second-side back wheel (3b) of the pallet (7) and the rotation axis (15b) of the second-side driving part.

6. The apparatus according to claim 2, wherein in the moving direction of the pallet (7), the first-side front wheel (4a) and the first-side back wheel (3a) are staggered to right and left of each other, with the second-side front wheel (4b) and the second-side back wheel (3b) being also staggered to right and left of each other.

7. A method to change the moving direction of a pallet (7) which is driven by a first-side transmission part (1) and a second-side transmission part (2), at the end of a transport conveyor, wherein in the moving direction of the pallet (7) about to be turned, a first-side driving part (6a) used to drive the first-side transmission part (1), which is connected rotatablely with a first side of the pallet (7) via at least one first-side connector (5a), and a second-side driving part (6b) used to drive said second-side transmission part (2), which is connected rotatablely with a second side opposite to said first side of the pallet (7) via at least one second-side connector (5b), are staggered in front and back with each other, wherein the first-side connector (5a) and the second-side connector (5b) being positioned such that, by defining a center line (C1-C2) on the pallet (7) by its center along left-to-right direction, which is vertical to the moving direction of the pallet (7), in the moving direction of the pallet, one of the first-side connector (5a) and the second-side connector (5b) is in front of the center line (C1-C2), the other one is behind the center line (C1-C2), and on a plane along the moving direction of the pallet (7) about to be turned, the projected distance between the central axis of the first-side connector (5a) of the pallet (7) and the rotation axis (15a) of the first-side driving part is equal to the projected distance between the central axis of the second-side connector (5b) of the pallet (7) and the rotation axis (15b) of the second-side driving part, said pallet (7) being on parallel surfaces at variational heights during the cycled process in sequence including transport, moving down, return, and moving up.

8. The method according to claim 7, wherein
a first-side track (8) whereon a first-side steering channel (11) is positioned, lies under a first-side front wheel (4a) and a first-side back wheel (3a) being respectively mounted at the front and back of the first side of the pallet (7) in transport process; and
a second-side track (9), whereon a second-side steering channel (13) is positioned, lies under a second-side front wheel (4b) and a second-side back wheel (3b) being respectively mounted at the front and back of the second side of the pallet (7); wherein
while the pallet (7) in the process of moving down, the first-side back wheel (3a) and the second-side back wheel (3b) respectively moving from being on the first-side track (8) and the second-side track (9) to being below through the first-side steering channel (11) and second-side steering channel (13), and on the contrary, while the pallet (7) in process of moving up, the first-side back wheel (3a) and the second-side back wheel (3b) respectively moving from being below the first-side track (8) and the second-side track (9) to being above, through the first-side steering channel (11) and the second-side steering channel (13).

9. A transport conveyor with low structure height, comprising:
A frame (14);
A transport passage, which mainly consists of several continuous pallets (7) inside said frame (14), each pallet (7) accompanied with a first-side front wheel (4a) and a first-side back wheel (3a) respectively mounted on the front and back of a first side of the pallet (7), and a second-side front wheel (4b) and a second-side back wheel (3b) respectively mounted on the front and back of a second side which is opposite to said first side of the pallet (7);
A first-side transmission part (1) and a second-side transmission part (2) adapted to drive the pallets(7), parallelly located on the first side and the second side of the pallet (7) respectively;
A first-side driving part (6a) adapted to drive the first-side transmission part (1); and
A second-side driving part (6b) adapted to drive the second-side transmission part (2); is **characterized in that**, in the moving direction of the pallet which is about to change moving direction, the rotation axis (15a) of said first-side driving part (6a) and the rotation axis (15b) of said second-side driving part (6b) are staggered in front and back with each other.

10. The transport conveyor according to claim 9,further comprising a first-side track (8) adapted to support the first-side front wheel (4a) and the first-side back wheel (3a) moving along, and a second-side track (9) adapted to support the second-side front wheel (4b) and the back wheel (3b) moving along, wherein on said first-side track (8) is positioned a first-side steering channel (11), through which said first-side back wheel (3a) moves from being on the first-side track (8) to being below the first-side track (8) or from being below the first-side track (8) to being on the first side track (8), while on said second side track (9) is positioned a second-side steering channel (13), through which said second-side back wheel (3b) moves from being on the second-side track (9) to being below the second-side track (9) or from being below the second-side track (9) to being on the second side track (9).

11. The transport conveyor according to claim 10, wherein the first and second sides of each pallet (7) mount at least one first-side connector (5a) and at least one second-side connector (5b) being connected rotatablely with the first-side transmission part (1) and the second-side transmission part (2) respectively, wherein the first-side connector (5a) and the second-side connector (5b) being positioned such that, by defining a center line (C1-C2) on the pallet (7) by its center along left-to-right direction, which is vertical to the moving direction of the pallet (7), in the moving direction of the pallet (7), one of the first-side connector (5a) and the second-side connector (5b) is in front of the center line (C1-C2), and the other one is behind the center line (C1-C2).

12. The transport conveyor according to claim 11, wherein on a plane along the moving direction of the pallet (7) about to be turned, the projected distance between the central axis of the first-side connector (5a) of the pallet (7) and the rotation axis (15a) of the first-side driving part is equal to the projected distance between the central axis of the second-side connector (5b) of the same pallet (7) and the rotation axis (15b) of the second-side driving part.

13. The transport conveyor according to claim 11, wherein
The axle of the first-side front wheel (4a), extending outwards to form the first-side connector (5a), and
The axle of the second-side back wheel (3b), extending outwards to form the second-side connector (5b), and being able to move through an axle steering channel (12) mounted on the second-side track (9), from being above the second-side track (9) to being below or from being below the second-side track (9) to being above,
Are positioned as that, on a plane along the moving direction of the pallet (7) about to be turned, the projected distance between the axle of the first-side front wheel (4a) of the pallet (7) and the rotation axis (15a) of the first-side driving part is equal to the projected distance between the axle of the second-side back wheel (3b) of the pallet (7) and the rotation axis (15b) of the second-side driving part.

14. The transport conveyor according to claim 10, wherein in the moving direction of the pallet (7), the first-side front wheel (4a) and the first-side back wheel (3a) are staggered to right and left of each other, with the second-side front wheel (4b) and the second-side back wheel (3b) being also staggered to right and left of each other.
